Europäisches Patentamt

European Patent Office

Office européen des brevets

(11) Veröffentlichungsnummer: **0 255 468**
**B1**

(12) # EUROPÄISCHE PATENTSCHRIFT

(45) Veröffentlichungstag der Patentschrift:
06.06.90

(51) Int. Cl.⁵: **B60B 39/00**

(21) Anmeldenummer: **87730081.4**

(22) Anmeldetag: **23.07.87**

(54) Gleitschutzvorrichtung.

(30) Priorität: **30.07.86 DE 3625678**

(43) Veröffentlichungstag der Anmeldung:
**03.02.88 Patentblatt 88/5**

(45) Bekanntmachung des Hinweises auf die Patenterteilung:
**06.06.90 Patentblatt 90/23**

(84) Benannte Vertragsstaaten:
**AT BE CH DE FR GB IT LI NL SE**

(56) Entgegenhaltungen:
**DE-A- 2 311 985**
**DE-A- 3 420 789**
**DE-U- 8 521 265**
**US-A- 2 790 514**
**US-A- 2 809 704**

(73) Patentinhaber: **RUD-Kettenfabrik Rieger & Dietz GmbH u. Co., Friedensinsel, D-7080 Aalen 1(DE)**

(72) Erfinder: **Biehler, Wolfgang, Kernerstrasse 8, D-7080 Aalen(DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15(DE)**

**Beschreibung**

Die Erfindung betrifft eine Gleitschutzvorrichtung für Kraftfahrzeuge mit von einem in eine Drehbewegung versetzbaren Rotor gehaltenen Gleitschutzmitteln, mit einem insbesondere über Zwischenglieder an der Radachse des Fahrzeuges gelagerten Tragarm für den Rotor und mit einer zum Überführen des Tragarmes aus einer Ruhestellung in eine Betriebsstellung dienenden Antriebseinrichtung, zu der ein Motor und ein von diesem angetriebenes Schneckengetriebe gehören.

Aus der US-PS 22 83 948 ist eine Gleitschutzvorrichtung der in Betracht gezogenen Art mit einem einstufigen Schneckengetriebe bekannt, dessen Schnecke vom Ende der Ankerwelle eines reversierbaren Gleichstrommotors gebildet wird und dessen Schneckenrad auf der Schwenkachse des Tragarmes für den Rotor mit den Gleitschutzmitteln gelagert ist. Um den Tragarm der bekannten Vorrichtung in der Betriebsstellung zu halten, bedarf es seiner Arretierung. Diese erzielt man durch Abschalten des Motors, der mithin als Bremsmotor ausgebildet sein muß. In Betracht käme auch eine selbsthemmende Ausbildung des Schneckengetriebes, dies würde allerdings aufgrund des Zusammenhangs zwischen Steigung und Modul (kleine Steigung erfordert großen Modul) zu ungünstigen Proportionen und zur Erhöhung des Raumbedarfs führen, der im Hinblick auf die vergleichsweise großen Abmessungen des zum Antrieb des einstufigen Schneckengetriebes erforderlichen Elektromotors ohnehin bereits beträchtlich ist. Nicht zu befriedigen vermag bei der bekannten Vorrichtung darüber hinaus, daß sie anders als eine aus der US-PS 25 43 876 ebenfalls bekannte Gleitschutzvorrichtung den Walkbewegungen des Fahrzeugreifens keine Rechnung trägt. Der Halter kann gegenüber dem Reifen - wenn man vom vernachlässigbaren Federungsvermögen des Tragarmes einmal absieht - keine Ausweichbewegungen ausführen und beim Passieren von Schlaglöchern oder sonstigen Fahrbahnunebenheiten treten an der Berührungsstelle zwischen Halter und Reifen erhebliche Kräfte auf, die sich ungünstig sowohl auf den Reifen als auch auf das Schneckengetriebe auswirken.

Der Erfindung liegt die Aufgabe zugrunde, eine Gleitschutzvorrichtung der in Betracht gezogenen Art mit einem Antrieb für den Tragarm auszustatten, der bei kompakter Bauweise eine geringe Antriebsleistung erfordert, es aber gleichwohl gestattet, den am freien Ende des Tragarmes angeordneten Rotor mit großer Kraft gegen die Reifenflanke zu drücken, und der beim Auftreten unregelmäßiger Walkbewegungen des Reifens Ausgleichbewegungen des Tragarmes bzw. des Rotors ermöglicht.

Die Aufgabe wird bei einer gattungsgemäßen Einrichtung erfindungsgemäß dadurch gelöst, daß das Schneckengetriebe eine selbsthemmende Eingangsstufe und eine dieser nachgeschalteten Ausgangsstufe aufweist, die über ein drehelastisches Kupplungselement mit dem Tragarm in Verbindung steht.

Die erfindungsgemäße Vorrichtung bietet den Vorteil, daß sie wenig Raum beansprucht und aufgrund der mindestens zweistufigen, ein großes Übersetzungsverhältnis zulassenden Ausführung des Schneckengetriebes mit geringer Leistung betrieben werden kann. Die Selbsthemmung des Schneckengetriebes in der ersten Stufe erweist sich im Hinblick auf die dort auftretenden verhältnismäßig niedrigen Kräfte als vorteilhaft. Das drehelastische Kupplungselement zwischen der Ausgangsstufe des Schneckengetriebes und dem Tragarm verhindert kräftemäßige Überbeanspruchungen sowohl des Schneckengetriebes als auch des Reifens. Durch die Verwendung eines mehrstufigen Schneckengetriebes und eines zu dessen Antrieb benötigten Motors vergleichsweise kleiner Leistung und Baugröße läßt sich die ungefederte Masse der mit einer Gleitschutzvorrichtung versehenen Fahrzeugachse reduzieren. Die geringe Antriebsleistung und die selbsthemmende Ausbildung des Schneckengetriebes ermöglichen darüber hinaus eine räumliche Trennung von Motor und Schneckengetriebe und deren Verbindung über eine biegsame Welle. Der Motor kann mit anderen Worten zwecks weiterer Verringerung der ungefederten Massen am Fahrzeugrahmen befestigt werden, ohne daß es zur Kraftübertragung vom Motor zum Tragarm teurer Übertragungsmittel bedarf.

Die mehrstufige Ausbildung des Schneckengetriebes ermöglicht es in Verbindung mit der Unterbringung der Getriebestufen in gesonderten, in unterschiedlichen Lagen zueinander verbindbaren Gehäuseteilen darüber hinaus, die Position der Antriebswelle für die Eingangsstufe gegenüber der Position der Abtriebswelle der Ausgangsstufe des Schneckengetriebes zu variieren und somit vom Fahrzeughersteller vorgegebenen räumlichen Verhältnissen Rechnung zu tragen.

Weitere Merkmale und Einzelheiten der erfindungsgemäßen Gleitschutzvorrichtung ergeben sich aus den Unteransprüchen und der nachstehenden Beschreibung eines in der beigefügten Zeichnung dargestellten bevorzugten Ausführungsbeispieles. Es zeigen:

Fig. 1 die perspektivische Ansicht einer mit zwei Gleitschutzvorrichtungen ausgestatteten Hinterachse eines Lastkraftwagens,

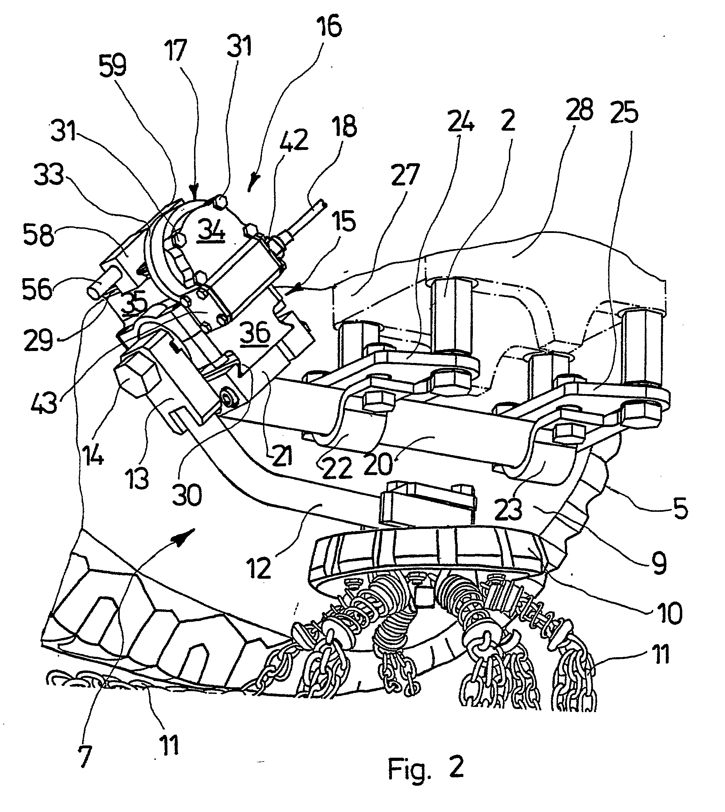

Fig. 2 in vergrößertem Maßstab die perspektivische Ansicht einer sich in ihrer Betriebsstellung befindlichen Gleitschutzvorrichtung,

Fig. 3 den aus der Betriebsstellung geschwenkten Tragarm der Gleitschutzvorrichtung gemäß Fig. 2,

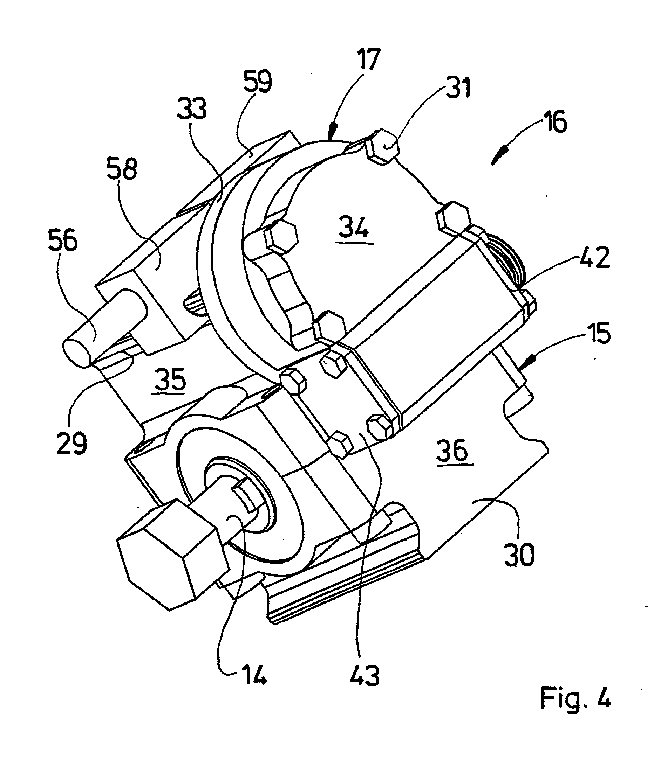

Fig. 4 eine erste perspektivische Ansicht des einen Teil der Antriebseinrichtung für den Tragarm bildenden Schneckengetriebes,

Fig. 5 eine weitere perspektivische Ansicht des Schneckengetriebes,

Fig. 6 eine Explosionsdarstellung von Teilen des Schneckengetriebes,

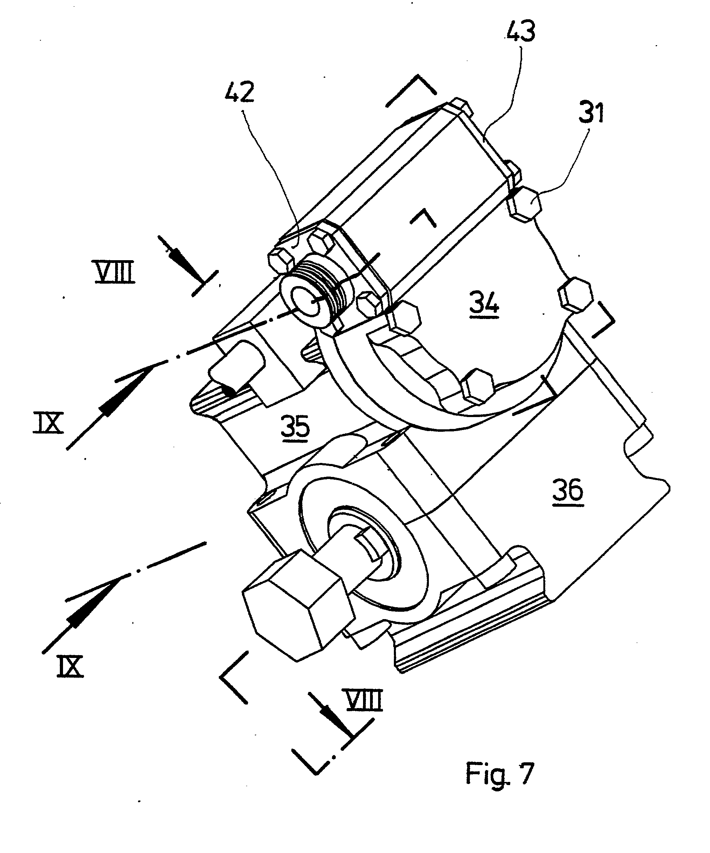

Fig. 7 eine der Fig. 5 entsprechende Ansicht des Schneckengetriebes mit gegenüber der Darstellung in Fig. 5 um 180° geschwenkter Eingangsstufe,

Fig. 8 einen Schnitt längs der Linie VIII-VIII in Fig. 7,

Fig. 9 einen Schnitt längs der Linie IX-IX in Fig. 8,

Fig. 10 teilweise im Schnitt die Draufsicht auf das getriebeseitige Ende eines modifizierten Tragarmes in einer unbelasteten Stellung,

Fig. 11 eine der Fig. 10 entsprechende Draufsicht auf einen belasteten Tragarm und

Fig. 12 teilweise im Schnitt die Seitenansicht des Tragarmes gemäß Fig. 10 und 11.

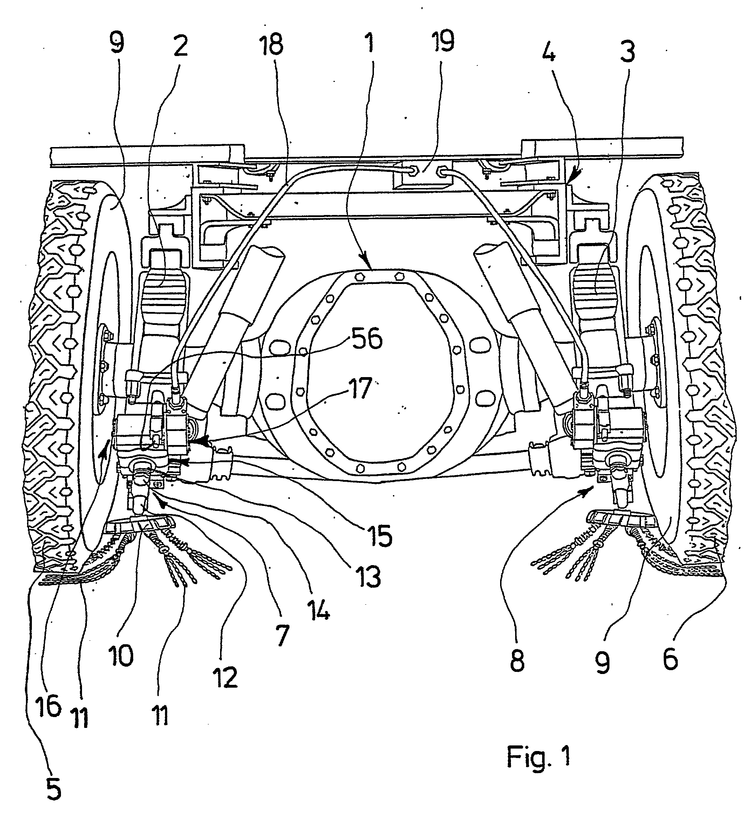

In Fig. 1 ist 1 die Hinterachse eines Lastkraftwagens, die durch zwei Blattfederpakete 2 und 3 gegenüber dem Fahrzeugrahmen 4 abgefedert ist. Den an der Hinterradachse 1 befestigten Fahrzeugreifen 5 und 6 sind zwei allgemein mit 7 und 8 bezeichnete Gleitschutzvorrichtungen zugeordnet, die aus identischen Bauteilen bestehen und von denen im folgenden daher lediglich eine beschrieben wird. Zu jeder Gleitschutzvorrichtung 7 bzw. 8 gehört ein gegen die Flanke 9 eines Fahrzeugreifens 5 bzw. 6 preßbarer und durch den jeweiligen Fahrzeugreifen in Drehbewegung versetzbarer Rotor 10, über dessen Umfang von Kettensträngen gebildete Gleitschutzmittel 11 verteilt sind, die unter Fliehkrafteinwirkung vom Rotor 10 weg in den Bereich der Bodenberührungsfläche des sich drehenden Fahrzeugreifens geschleudert werden. Der Rotor 10 ist drehbar an einem Tragarm 12 gelagert, dessen eines Ende 13 auf der Abtriebswelle 14 der Ausgangsstufe 15 eines Schneckengetriebes 16 gelagert ist, dessen Eingangsstufe 17 über eine biegsame Welle 18 durch einen am Fahrzeugrahmen 4 in einem Gehäuse 19 angeordneten Motor antreibbar ist, der vorzugsweise als reversierbarer, aus dem Bordnetz des Lastkraftwagens gespeister Gleichstrommotor ausgebildet ist.

Zur Halterung des Schneckengetriebes 16 am Fahrzeug dient ein Träger 20, der an seinem einen Ende einen als Klemmkralle ausgebildeten Halter 21 aufweist. Der Träger 20 ist mittels Schellen 22,23 an Anschlußplatten 24,25 befestigt, die ihrerseits mit Hilfe von als Distanzhülsen ausgebildeten Muttern 26 an durch strichpunktierte Linien angedeuteten Teilen 27,28 der Hinterradachse 1 befestigt sind.

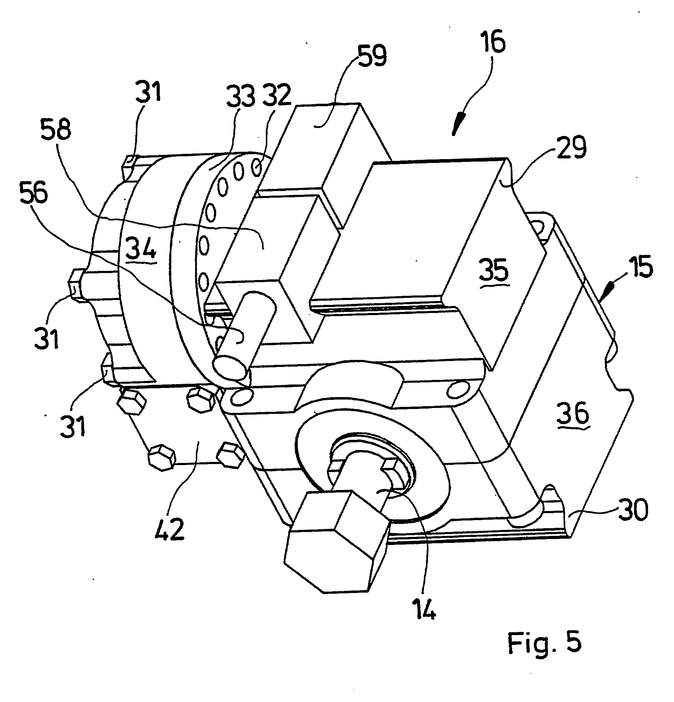

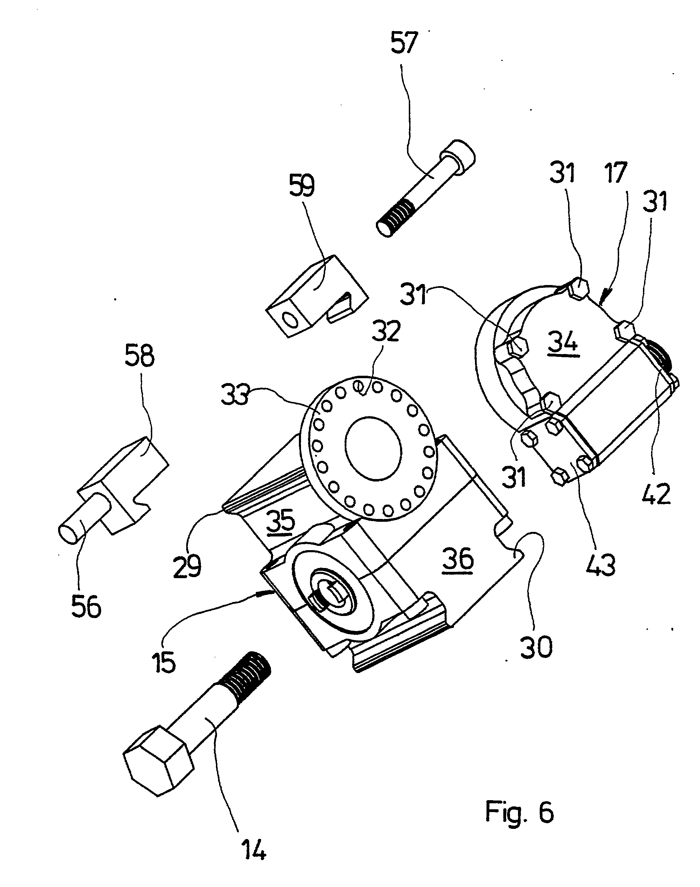

Der Träger 20 mit dem eine Längsführung formenden Halter 21 bildet zusammen mit den Schellen 22,23 und den Anschlußplatten 24,25 eine Universaladapter, der die Anpassung der Lage der Gleitschutzvorrichtungen 7 und 8 an die fahrzeugspezifischen Gegebenheiten außerordentlich erleichtert. Gefördert wird die genannte Anpassungsfähigkeit der Gleitschutzvorrichtung an die jeweiligen räumlichen Verhältnisse noch durch die spezielle Ausgestaltung des Schneckengetriebes 16. Dieses ist, wie man insbesondere aus den Fig. 5 und 6 erkennen kann, mit zwei schwalbenschwanzförmigen Aufnahmen 29,30 versehen, die beide auf die Abmessungen des von der Klemmkralle gebildeten Halters 21 abgestimmt sind und die Befestigung des Schneckengetriebes 16 in zwei um 180° zueinander versetzten Einbaustellungen zulassen. Im dargestellten Fall sind die Aufnahmen 29,30 so angeordnet, daß sie unterschiedliche Abstände zur Abtriebswelle 14 der Ausgangsstufe 15 des Schneckengetriebes 16 aufweisen. Zur weiteren Steigerung der räumlichen Anpaßbarkeit des Schneckengetriebes 16 trägt die Art der Verbindung der Eingangsstufe 17 mit der Ausgangsstufe 15 bei. Diese Verbindung erfolgt über vier Schrauben 31 der Eingangsstufe 17, die in Gewindebohrungen 32 eines Flansches 33 der Ausgangsstufe 15 schraubbar sind. Durch die Wahl bestimmter Gewindebohrungen 32 für die Schrauben 31 läßt sich die Winkellage zwischen der Ausgangsstufe 15 und der Eingangsstufe 17 variieren.

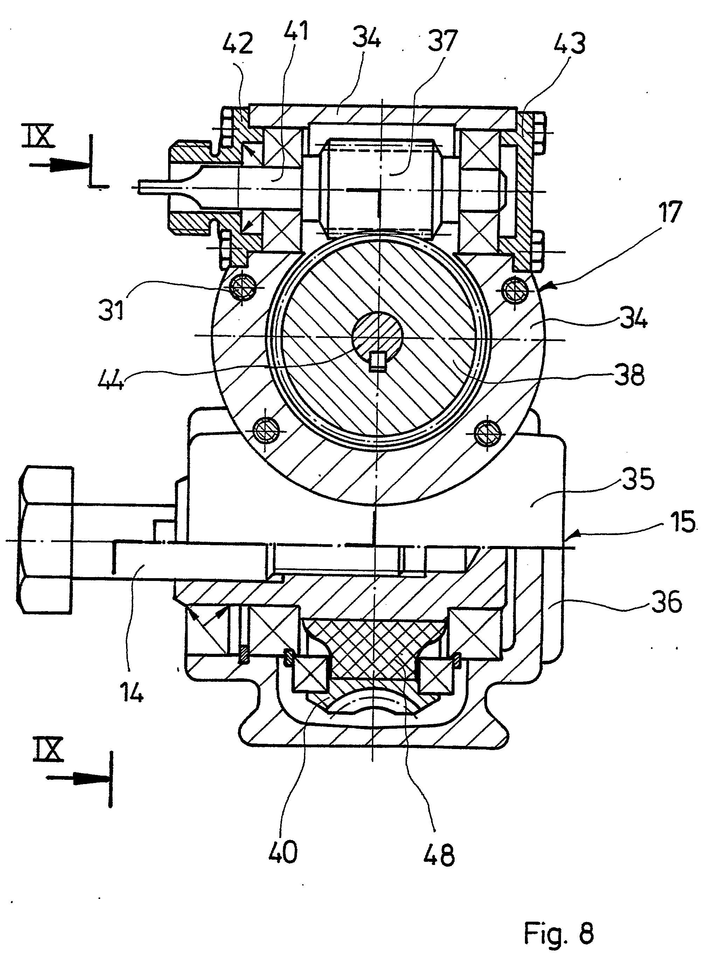

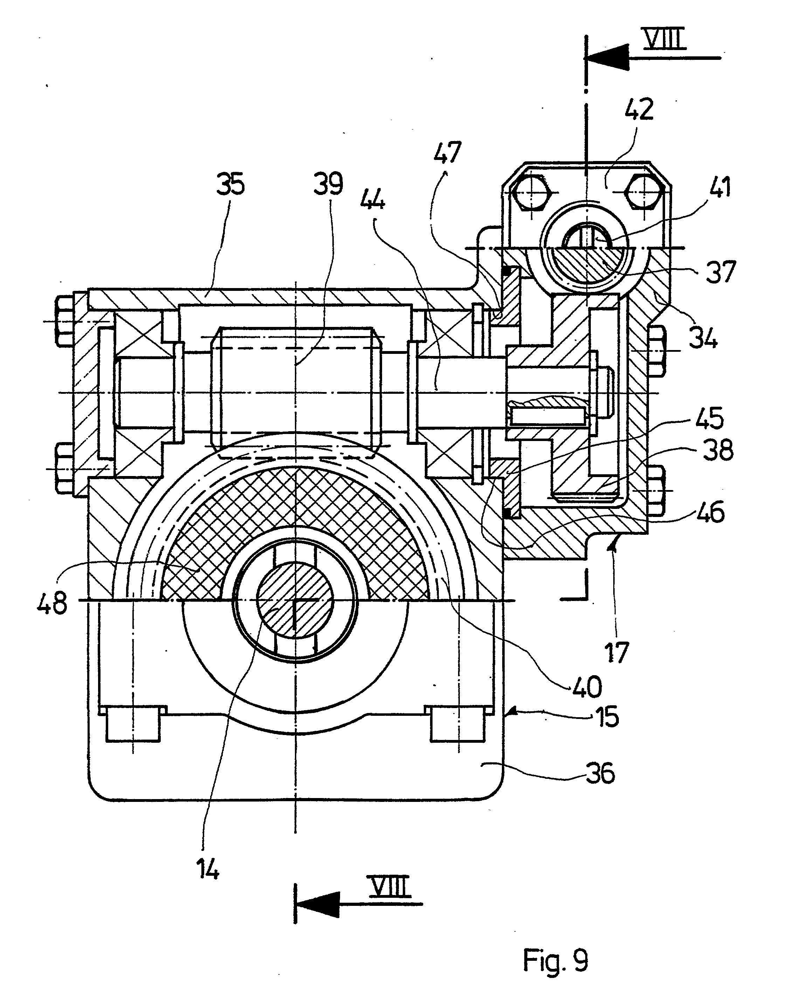

Einzelheiten des Aufbaus des Schneckengetriebes 16 ergeben sich insbesondere aus den Fig. 8 und 9. Das Schnekkengetriebe besteht im wesentlichen aus drei Gehäuseteilen 34, 35 und 36, von denen das Gehäuseteil 34 die Schnecke 37 und das schrägverzahnte Schneckenrad 38 der Eingangsstufe 17 und die Gehäuseteile 35 und 36 die zweigängige Schnecke 39 und das Schneckenrad 40 der Ausgangsstufe 15 beherbergen.

Wie aus Fig. 8 erkennbar ist, kann die Antriebswelle 41 für die Schnecke 37 sowohl links als auch rechts aus dem Gehäuseteil 34 herausgeführt werden. Es ist lediglich ein Austausch der Deckel 42 und 43 erforderlich. Das Schneckenrad 38 ist über eine Welle 44 mit der Schnecke 39 verbunden. Um eine genau fluchtende Anordnung des Schneckenrades 38 mit der Schnecke 39 sicherzustellen, ist in das Gehäuseteil 34 ein Zentrierflansch 45 eingepaßt, der einen Zentrieransatz 46 aufweist, welcher in eine Zentrierbohrung 47 des Gehäuseteiles 35 ragt.

Das Schneckenrad 40 der Ausgangsstufe 15 des Schneckengetriebes ist als Zahnkranz ausgebildet und über ein drehelastisches, vorzugsweise aus einem Gummiring bestehendes Kupplungselement 48 mit der Abtriebswelle 14 verbunden. Das drehelastische Kupplungselement 48 verhindert die direkte Übertragung von z.B. durch Walkbewegungen des Fahrzeugreifens in den Tragarm 12 eingeleiteten Bewegungen auf das Schneckenrad 40.

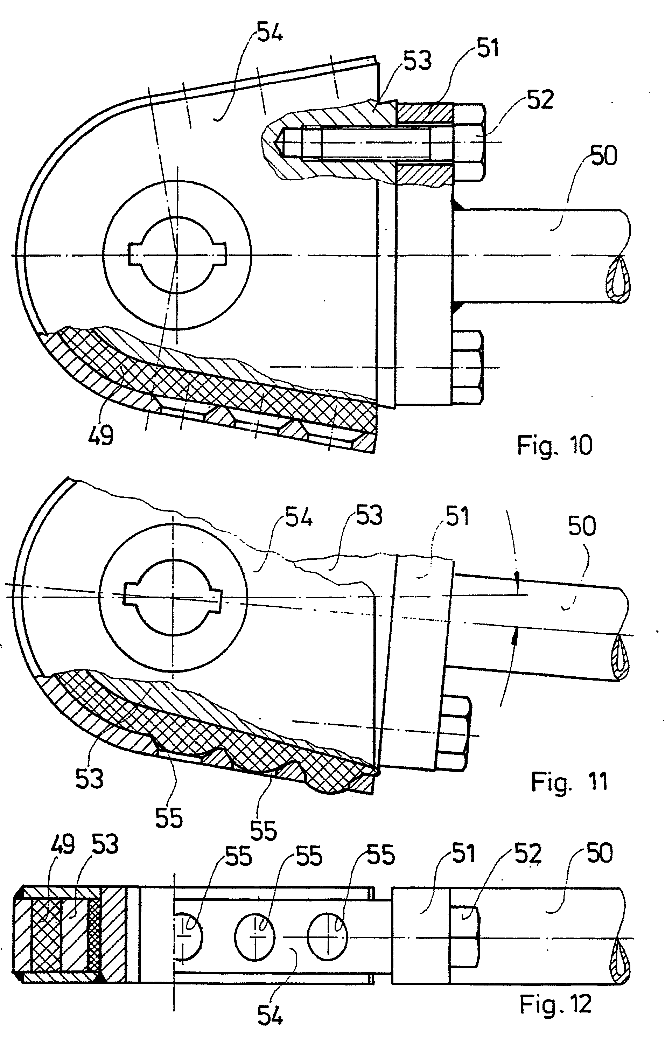

Anstelle eines zwischen dem Schneckenrad 40 und der Abtriebswelle 14 angeordneten drehelastischen Kupplungselementes kann auch ein drehelastisches Kupplungselement 49 am Ende eines modifizierten Tragarmes 50 angeordnet werden, wie dies in den Fig. 10 bis 12 dargestellt ist. Das Ende des Tragarmes 50 ist in diesem Fall mit einem Flansch 51 versehen, an dem mittels Schrauben 52 ein Kopfstück 53 befestigt ist, das in ein Gehäuse 54 ragt, welches drehfest mit der Abtriebswelle 14 der Ausgangsstufe 15 des Schneckengetriebes 16 verbunden werden kann. Zwischen dem Gehäuse 54 und dem Kopfstück 54 ist das aus Gummi oder einem entsprechenden synthetischen Material bestehende drehelastische Kupplungselement 49 angeordnet. Fig. 11 zeigt, daß relative Winkelbewegungen zwischen dem Kopfstück 53 und dem Gehäuse 54 möglich sind, wobei Teile des Materials des elastischen Kupplungselementes 49 aus Löchern 55 in der Außenwand des Gehäuse 54 heraustreten können.

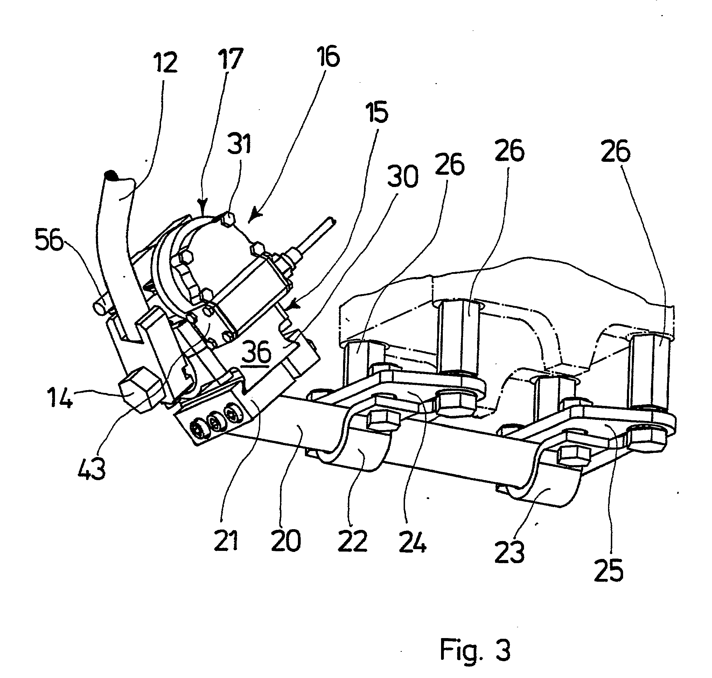

Wie insbesondere die Fig. 3, 5 und 6 zeigen, ist auf der nicht zu Befestigungszwecken genutzten Aufnahme 29 ein einstellbarer Endanschlag 56 befestigt, der die Lage des Tragarmes 12 bei in die Ruhestellung geschwenkter Gleitschutzvorrichtung bestimmt. Ähnlich wie im Falle des Halters 21 findet auch hier als Befestigungsmittel eine aus zwei durch eine Schraube 57 zusammenziehbaren Klemmbacken 58,59 gebildete Klemmkralle Verwendung.

In der Praxis hat sich ein zweistufiges Schneckengetriebe mit einem Übersetzungsverhältnis von 1 : 67 in der Eingangsstufe und einem Übersetzungsverhältnis von 1 : 14 in der Ausgangsstufe bewährt. Zweckmäßigerweise ist das Schneckenrad der Eingangsstufe schräg verzahnt und die Schnecke der Ausgangsstufe zur Erhöhung des Wirkungsgrades zweigängig ausgebildet. Infolge der zweistufigen Ausbildung des Schneckengetriebes kann dieses mit vergleichsweise hoher Drehzahl und kleinem Drehmoment angetrieben werden, so daß der Einsatz biegsamer Wellen ohne Bedenken möglich ist.

## Patentansprüche

1. Gleitschutzvorrichtung (7,8) für Kraftfahrzeuge mit von einem in eine Drehbewegung versetzbaren Rotor (10) gehaltenen Gleitschutzmitteln (11), mit einem insbesondere über Zwischenglieder an der Radachse des Fahrzeuges gelagerten Tragarm (12,50) für den Rotor (10) und mit einer zum Überführen des Tragarmes (12,50) aus einer Ruhestellung in eine Betriebsstellung dienenden Antriebseinrichtung, zu der ein Motor und ein von diesem angetriebenes Schnekkengetriebe (16) gehören, dadurch gekennzeichnet, daß das Schneckengetriebe (16) eine selbsthemmende Eingangsstufe (17) und eine dieser nachgeschalteten Ausgangsstufe (15) aufweist, die über ein drehelastisches Kupplungselement (48,49) mit dem Tragarm (12,50) in Verbindung steht.

2. Gleitschutzvorrichtung nach Anspruch 1, dadurch gekennzeichnet, daß die Eingangsstufe (17) des Schnekkengetriebes (16) über eine biegsame Welle (18) mit dem an einer getriebefernen Stelle des Fahrzeuges angeordneten Motor verbunden ist.

3. Gleitschutzvorrichtung nach Anspruch 1 oder 2, dadurch gekennzeichnet, daß das Schneckengetriebe (16) mindestens zwei Gehäuseteile (34,35) aufweist, deren Lage zueinander zwecks Veränderung der Position der Antriebswelle (41) der Eingangsstufe (17) gegenüber der Position der Abtriebswelle (14) der Ausgangsstufe (15) veränderbar ist.

4. Gleitschutzvorrichtung nach Anspruch 3, dadurch gekennzeichnet, daß eines der beiden Gehäuseteile (34) mit einem Zentrieransatz (46) und einer Vielzahl von zu diesem zentrisch zu diesem angeordneten Gewindebohrungen (32) versehen ist, während das andere Gehäuseteil (35) eine Zentrierbohrung (47) und mindestens zwei mit den Gewindebohrungen (32) in eine fluchtende Position überführbare Durchstecklöcher für Schrauben (31) aufweist.

5. Gleitschutzvorrichtung nach einem der Ansprüche 1 bis 4, dadurch gekennzeichnet, daß zum Antrieb des Schnekkengetriebes (16) ein reversierbarer Gleichstrommotor dient.

6. Gleitschutzvorrichtung nach einem der Ansprüche 1 bis 5, dadurch gekennzeichnet, daß das Schneckengetriebe (16) zweistufig ausgebildet ist.

7. Gleitschutzvorrichtung nach einem der Ansprüche 1 bis 6, dadurch gekennzeichnet, daß die Ausgangsstufe (15) des Schneckengetriebes (16) mit einer zweigängigen Schnecke (39) versehen ist.

8.. Gleitschutzvorrichtung nach einem der Ansprüche 1 bis 7, dadurch gekennzeichnet, daß das Schneckenrad (38) der Eingangsstufe (17) schrägverzahnt ist.

9. Gleitschutzvorrichtung nach einem der Ansprüche 1 bis 8, dadurch gekennzeichnet, daß die Gleitschutzmittel (11) aus mit dem Rotor (10) verbundenen Kettensträngen bestehen, deren freie Enden bei in der Betriebsstellung umlaufendem Rotor (10) unter Fliehkrafteinwirkung vom Rotor weg radial nach außen geschleudert werden.

10. Gleitschutzvorrichtung nach einem der Ansprüche 1 bis 9, dadurch gekennzeichnet, daß das Schneckenrad (40) der Ausgangsstufe (15) des Schneckengetriebes (16) als Zahnkranz ausgebildet ist.

11. Gleitschutzvorrichtung nach Anspruch 10, dadurch gekennzeichnet, daß der Zahnkranz (40) über ein drehelastisches Kupplungselement (48) mit der Abtriebswelle (14) der Ausgangsstufe (15) des Schneckengetriebes (16) verbunden ist.

12. Gleitschutzvorrichtung nach Anspruch 11, dadurch gekennzeichnet, daß das drehelastische Kupplungselement (48) aus einem Gummiring besteht.

13. Gleitschutzvorrichtung nach einem der Ansprüche 1 bis 10, dadurch gekennzeichnet, daß das drehelastische Kupplungselement (49) am Tragarm (50) angeordnet ist und dessen Anschlußauge bildet.

14. Gleitschutzvorrichtung nach Anspruch 13, dadurch gekennzeichnet, daß das drehelastische Kupplungselement (49) austauschbar ist.

15. Gleitschutzvorrichtung nach einem der Ansprüche 1 bis 14, dadurch gekennzeichnet, daß sie mit einem am Gehäuse des Schneckengetriebes (16) angeordneten, die Ruheposition des Tragarmes (12) bestimmenden Endanschlag (56) versehen ist.

16. Gleitschutzvorrichtung nach Anspruch 15, dadurch gekennzeichnet, daß der Endanschlag (56) verschiebbar auf einer der Aufnahmen (29,30) gelagert ist.

17. Gleitschutzvorrichtung nach einem der Ansprüche 1 bis 16, dadurch gekennzeichnet, daß das Gehäuse (34,35,36) des Schneckengetriebes (16) mit zwei unterschiedliche Einbaustellungen zulassenden Aufnahmen (29,30) versehen ist.

18. Gleitschutzvorrichtung nach Anspruch 17, dadurch gekennzeichnet, daß die Aufnahmen (29,30) als Teile von Längsführungen ausgebildet sind.

19. Gleitschutzvorrichtung nach Anspruch 18, dadurch gekennzeichnet, daß die Aufnahmen (29,30) Teile von Schwalbenschwanzführungen bilden.

20. Gleitschutzvorrichtung nach Anspruch 3 oder Anspruch 3 und einem der Unteransprüche, dadurch gekennzeichnet, daß die Aufnahmen (29,30) am Gehäuse der Ausgangsstufe (15) des Schneckengetriebes (16) angeordnet sind.

21. Gleitschutzvorrichtung nach einem der Ansprüche 17 bis 20, dadurch gekennzeichnet, daß die Aufnahmen (29,30) unterschiedliche Abstände zur Abtriebswelle (14) der Ausgangsstufe (15) des Schneckengetriebes (16) aufweisen.

22. Gleitschutzvorrichtung nach einem der Ansprüche 1 bis 21, dadurch gekennzeichnet, daß der Antrieb der Schnecke (37) der Eingangsstufe (17) des Schneckengetriebes (16) von zwei Seiten erfolgen kann.

## Claims

1. An anti-skid device (7, 8) for motor vehicles, comprising anti-skid means (11) held by a rotatable rotor (10), a supporting arm (12, 50) for the rotor (10) and mounted on the vehicle axle, more particularly via intermediate members, and a drive means for moving the supporting arm (12, 50) from an inoperative position into an operative position and comprising a motor and a worm gear (16) driven by it, characterized in that the worm gear (16) has a self-locking input stage (17) and a subsequent output stage (15) connected to the supporting arm (12, 50) by a torsionally resilient coupling element (48, 49).

2. An anti-skid device according to claim 1, characterized in that the input stage (17) of the worm gear (16) is connected by a flexible shaft (18) to the motor which is disposed at a place on the vehicle remote from the gear.

3. An anti-skid device according to claim 1 or 2, characterized in that the worm gear (16) has at least two casing parts (34, 35) the relative position of which is variable so as to vary the position of the drive shaft (41) of the input stage (17) relative to the position of the driven shaft (14) of the output stage (15).

4. An anti-skid device according to claim 3, characterized in that one of the two housing parts (34) has a centring attachment (46) and a plurality of threaded bores (32) disposed centrally therein, whereas the other casing part (35) has a centring bore (47) and at least two through-holes for screws (31) for bringing into line with the threaded bores (32).

5. An anti-skid device according to any of claims 1 to 4, characterized in that a reversible dc motor is used for driving the worm gear (16).

6. An anti-skid device according to any of claims 1 to 5, characterized in that the worm gear (16) is twostage.

7. An anti-skid device according to any of claims 1 to 6, characterized in that the output stage (15) of the worm gear (16) is provided with a double-threaded worm (39).

8. An anti-skid device according to any of claims 1 to 7, characterized in that the worm wheel (38) of the input stage (17) is helical-toothed.

9. An anti-skid device according to any of claims 1 to 8, characterized in that the anti-skid means (11) comprise chains connected to the rotor (19) and having free ends which, when the rotor (10) is rotating in the operating position, are flung by centrifugal force outwards and radially away from the rotor.

10. An anti-skid device according to any of claims 1 to 9, characterized in that the worm wheel (40) of the output stage (15) of the worm gear (16) is a gear rim.

11. An anti-skid device according to claim 10, characterized in that the gear rim (40) is connected by a torsionally resilient coupling element (48) to the driven shaft (14) of output stage (15) of the worm gear (16).

12. An anti-skid device according to claim 11, characterized in that the torsionally resilient coupling element (48) comprises a rubber ring.

13. An anti-skid device according to any of claims 1 to 10, characterized in that the torsionally resilient coupling element (49) is disposed on the supporting arm (50) and constitutes an eyelet for connecting it.

14. An anti-skid device according to claim 13, characterized in that the torsionally resilient coupling element (49) is replaceable.

15. An anti-skid device according to any of claims 1 to 14, characterized in that it comprises an end abutment (56) disposed on the casing of the worm gear (16) and determining the inoperative position of the supporting arm (12).

16. An anti-skid device according to claim 15, characterized in that the end abutment (56) is movably mounted on one of the receiving means (29, 30).

17. An anti-skid device according to any of claims 1 to 16, characterized in that the casing (34, 35, 36) of the worm gear (16) has two receiving means (29, 30) for installing in various positions.

18. An anti-skid device according to claim 17, characterized in that the receiving means (29, 30) for parts of longitudinal guides.

19. An anti-skid device according to claim 18, characterized in that the receiving means (29, 30) are parts of dovetail guides.

20. An anti-skid device according to claim 3, or claim 3 and one of the sub-claims, characterized in that the receiving means (29, 30) are disposed on the casing of the output stage (15) of the worm gear (16).

21. An anti-skid device according to any of claims 17 to 20, characterized in that the receiving means (29, 30) are at various distances from the driven shaft (14) of the output stage (15) of the worm gear (16).

22. An anti-skid device according to any of claims 1 to 21, characterized in that the worm (37) of the input stage (17) of the worm gear (16) can be driven from two sides.

## Revendications

1. Dispositif antidérapant (7, 8) pour véhicules automobiles comportant des moyens antidérapants (11) maintenus par un rotor (10) mis en rotation, comportant un bras de support (12, 50), monté en particulier par des organes intermédiaires sur l'essieu du véhicule, destiné au rotor (10) et comportant un dispositif d'entraînement destiné à faire passer le bras de support (12, 50) d'une position de repos à une position de service, dispositif d'entraînement dont font partie un moteur et une transmission à vis sans fin (16) entraînée par celui-ci, caractérisé en ce que la transmission à vis sans fin (16) comporte un étage d'entrée (17) auto-bloquant et un étage de sortie (15) monté en aval du premier, qui est relié au bras de support (12, 50) par un élément d'accouplement (48, 49) élastique en torsion.

2. Dispositif antidérapant selon la revendication 1, caractérisé en ce que l'étage d'entrée (17) de la transmission à vis sans fin (16) est relié par un arbre (18) flexible à un moteur disposé en un point du véhicule, éloigné de la transmission.

3. Dispositif antidérapant selon la revendication 1 ou 2, caractérisé en ce que la transmission à vis sans fin (16) comporte au moins deux parties de carter (34, 35) dont la position l'une par rapport à l'autre est variable afin de modifier la position de l'arbre moteur (41) de l'étage d'entrée (17) par rapport à la position de l'arbre mené (14) de l'étage de sortie (15).

4. Dispositif antidérapant selon la revendication 3, caractérisé en ce que l'une des deux parties de carter (34) est pourvue d'un appendice de centrage (46) et d'une pluralité de trous taraudés (32) disposés de façon centrale par rapport à celui-ci, tandis que l'autre partie de carter (35) présente un alésage de centrage (47) et au moins deux trous débouchants pour vis (31) pouvant être alignés avec les trous taraudés (32).

5. Dispositif antidérapant selon l'une des revendications 1 à 4, caractérisé en ce que pour entraîner la transmission à vis sans fin (16) on a recours à un moteur à courant continu réversible.

6. Dispositif antidérapant selon l'une des revendications 1 à 5, caractérisé en ce que la transmission à vis sans fin (16) est à deux étages.

7. Dispositif antidérapant selon l'une des revendications 1 à 6, caractérisé en ce que l'étage de sortie (15) de la transmission à vis sans fin (16) est pourvu d'une vis sans fin (39) à deux filets.

8. Dispositif antidérapant selon l'une des revendications 1 à 7, caractérisé en ce que la roue tangente (38) de l'étage d'entrée (17) présente une denture oblique.

9. Dispositif antidérapant selon l'une des revendications 1 à 8, caractérisé en ce que les moyens antidérapants (11) sont constitués de chaînes reliées au rotor (10), dont les extrémités libres sont projetées radialement vers l'extérieur, loin du rotor, sous l'effet de la force centrifuge, lorsque le rotor (10) tourne en position de fonctionnement.

10. Dispositif antidérapant selon l'une des revendications 1 à 9, caractérisé en ce que la roue tangente (40) de l'étage de sortie (15) de la transmission à vis sans fin (16) est une couronne dentée.

11. Dispositif antidérapant selon la revendication 10, caractérisé en ce que la couronne dentée (40) est reliée à l'arbre mené (14) de l'étage de sortie (15) de la transmission à vis sans fin (16), par un élément d'accouplement (48) élastique en torsion.

12. Dispositif antidérapant selon la revendication 11, caractérisé en ce que l'élément d'accouplement (48) élastique en torsion, est un anneau de caoutchouc.

13. Dispositif antidérapant selon l'une des revendications 1 à 10, caractérisé en ce que l'élément d'accouplement (49) élastique en torsion est placé sur le bras de support (50) et forme son oeillet de raccordement.

14. Dispositif antidérapant selon la revendication 13, caractérisé en ce que l'élément d'accouplement (49) élastique en torsion est interchangeable.

15. Dispositif antidérapant selon l'une des revendications 1 à 14, caractérisé en ce qu'il est pourvu d'une butée terminale (56) placée sur le carter de la transmission à vis sans fin (16), et déterminant la position de repos du bras de support (12).

16. Dispositif antidérapant selon la revendication 15, caractérisé en ce que la butée terminale (56) est montée déplaçable sur l'un des logements (29, 30).

17. Dispositif antidérapant selon l'une des revendications 1 à 16, caractérisé en ce que le carter (34, 35, 36) de la transmission à vis sans fin (16) est pourvu de logements (29, 30) autorisant deux positions de montage différentes.

18. Dispositif antidérapant selon la revendication 17, caractérisé en ce que les logements (29, 30) sont des parties d'organes de guidage longitudinal.

19. Dispositif antidérapant selon la revendication 18, caractérisé en ce que les logements (29, 30) sont des parties d'organes de guidage à queue d'aronde.

20. Dispositif antidérapant selon la revendication 3 ou la revendication 3 et l'une des sousrevendications, caractérisé en ce que les logements (29, 30) sont placés sur le carter de l'étage de sortie (15) de la transmission à vis sans fin(16).

21. Dispositif antidérapant selon l'une des revendications 17 à 20, caractérisé en ce que les logements (29, 30) sont à des distances différentes de l'arbre mené (14) de l'étage de sortie (15) de la transmission à vis sans fin (16).

22. Dispositif antidérapant selon l'une des revendications 1 à 21, caractérisé en ce que l'entraînement de la vis sans fin (37) de l'étage d'entrée (17) de la transmission à vis sans fin (16) peut s'effectuer de deux côtés.

Fig. 1

Fig. 2

Fig. 3

Fig. 4

Fig. 5

Fig. 6

Fig. 7

Fig. 8

Fig. 9

Fig. 10

Fig. 11

Fig. 12